Europäisches Patentamt

European Patent Office

Office européen des brevets

(19)

(11) Veröffentlichungsnummer: **0 230 620 B1**

(12) **EUROPÄISCHE PATENTSCHRIFT**

(45) Veröffentlichungstag der Patentschrift: **23.10.91**

(21) Anmeldenummer: **86117678.2**

(22) Anmeldetag: **18.12.86**

(51) Int. Cl.⁵: **B60Q 1/14**

(54) **Scheinwerferanlage für Fahrzeuge, insbesondere für Kraftfahrzeuge.**

(30) Priorität: **18.01.86 DE 3601388**

(43) Veröffentlichungstag der Anmeldung:
**05.08.87 Patentblatt 87/32**

(45) Bekanntmachung des Hinweises auf die
Patenterteilung:
**23.10.91 Patentblatt 91/43**

(84) Benannte Vertragsstaaten:
**DE FR GB IT**

(56) Entgegenhaltungen:
**WO-A-86/05147**
**FR-A- 2 552 038**
**GB-A- 1 098 609**
**GB-A- 2 059 565**

**PATENT ABSTRACTS OF JAPAN, Band 7, Nr.
207 (M-242)[1352], 13. September 1983; & JP-
A-58 105 840 (MATSUSHITA DENKI SANGYO
K.K.) 23-06-1983**

**PATENT ABSTRACTS OF JAPAN, Band 8, Nr.
152 (M-309)[1589], 14. Juli 1984; & JP-A-59 48
243 (NISSAN JIDOSHA K.K.) 19-03-1984**

(73) Patentinhaber: **ROBERT BOSCH GMBH
Postfach 50**
**W-7000 Stuttgart 1(DE)**

(72) Erfinder: **Kretschmer, Heinz
Denkendorfstrasse 23
W-7124 Bönnigheim(DE)**
Erfinder: **Liètar, Christian, Dipl.-Ing.
8, Avenue Forel
CH-1110 Morges(CH)**
Erfinder: **Lindae, Gerhard, Dipl.-Ing.
Im Brühl 23
W-7250 Leonberg(DE)**
Erfinder: **Loewe, Richard
Brennerstrasse 75
W-7016 Gerlingen(DE)**
Erfinder: **Longchamp, Jean-François,
Dipl.-Phys.
19, Ch.de Grèsy
CH-1012 Lausanne(CH)**
Erfinder: **Neumann, Rainer, Dr.Dipl.-Phys.
Homburger Strasse 26
W-6000 Frankfurt/Main(DE)**
Erfinder: **Noelte, Eckhard, Dipl.-Ing.
Im Wiesbrunnen 8
W-7252 Weil der Stadt 3(DE)**
Erfinder: **Perthus, Peter
Artusweg 21
W-7000 Stuttgart 30(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Scheinwerferanlage für Fahrzeuge, insbesondere für Kraftfahrzeuge, nach der Gattung des Anspruchs 1. Eine solche Scheinwerferanlage ist durch die GB-A-1 098 609 bekannt. Diese Scheinwerferanlage weist einen Scheinwerfer auf, mit einem Reflektor und einer Lichtquelle, die ein Lichtbündel bilden, das die Fahrbahn in einer vorgegebenen Lichtverteilung ausleuchtet. Die Scheinwerferanlage weist außerdem eine Vorrichtung auf, die die Verkehrssituation vor dem Fahrzeug in Form des einfallenden Lichts registriert und hierfür einen Sensor aufweist, der als eine Fotozelle ausgebildet ist. Der Reflektor weist eine ellipsoide Form auf, wobei im ersten Brennpunkt die Lichtquelle und in der Ebene des Zweiten Brennpunkts eine Platte mit einer Öffnung angeordnet ist. Außerdem ist ein Mittel zur Änderung der Lichtverteilung in Form einer beweglichen Scheibe vorgesehen, mit der die Öffnung seitlich teilweise verschlossen werden kann. Vor der Fotozelle ist ebenfalls ein Platte mit einer Öffnung angeordnet, sowie eine bewegliche Scheibe, mit der die Öffnung seitlich teilweise verschlossen werden kann. Abhängig von der auf die Fotozelle treffenden Lichtmenge wird sowohl die in der Lichtaustrittsöffnung des Scheinwerfers angeordnete Scheibe als auch die vor der Fotozelle angeordnete Scheibe verstellt.

Aufgabe der Erfindung ist es, eine Scheinferanlage mit änderbarer Lichtverteilung zu schaffen, bei der die Lichtverteilung an die Erfordernisse bei unterschiedlichen Verkehrssituationen angepaßt werden kann.

Diese Aufgabe wird durch die mit den kennzeichnenden Merkmalen des Anspruchs 1 ausgebildete Scheinwerferanlage gelöst, indem der Rechner die aktuelle Verkehrssituation mit den gespeicherten Verkehrssituationen vergleicht und das Mittel zur Änderung der Lichtverteilung in der zur Erzielung einer für die jeweilige Verkehrssituation günstigen Lichtverteilung erforderlichen Weise steuert.

Vorteilhafte Weiterbildungen der Erfindung sind in den Unteransprüchen beschrieben.

Bei Scheinwerferanlagen, die nach dem Prinzip der Abbildungsoptik wirken und anstatt der Lichtscheibe ein Objektiv aufweisen, wird mit Anspruch 7 die Änderung der Licht verteilung in einfacher Weise erreicht. Ist die Scheinwerferanlage als Abblendlichtscheinwerfer mit einer Blende ausgebildet, deren optisch wirksame Kante die Helldunkelgrenze des Lichtbündels bildet, so erreicht man mit Anspruch 8 ebenfalls die Änderung der Lichtverteilung.

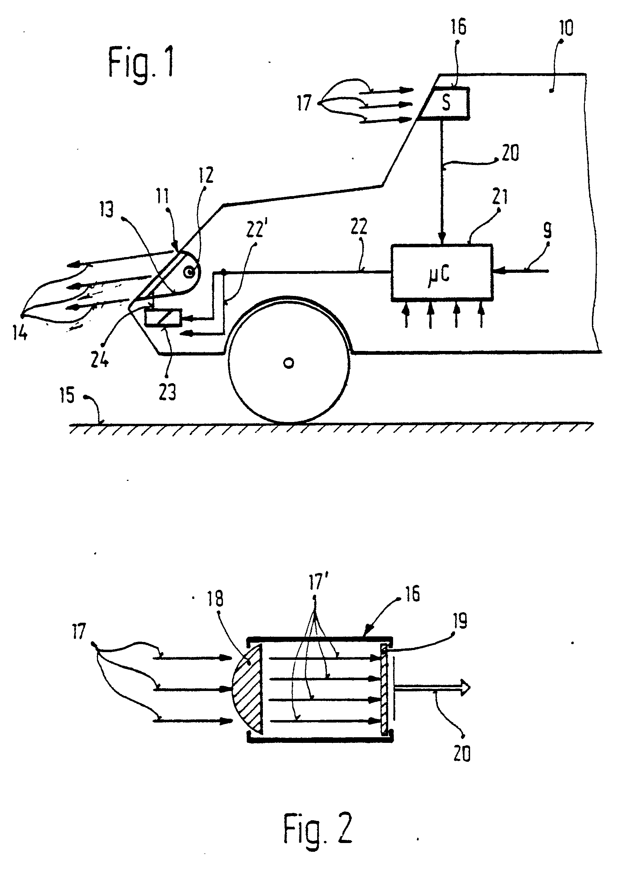

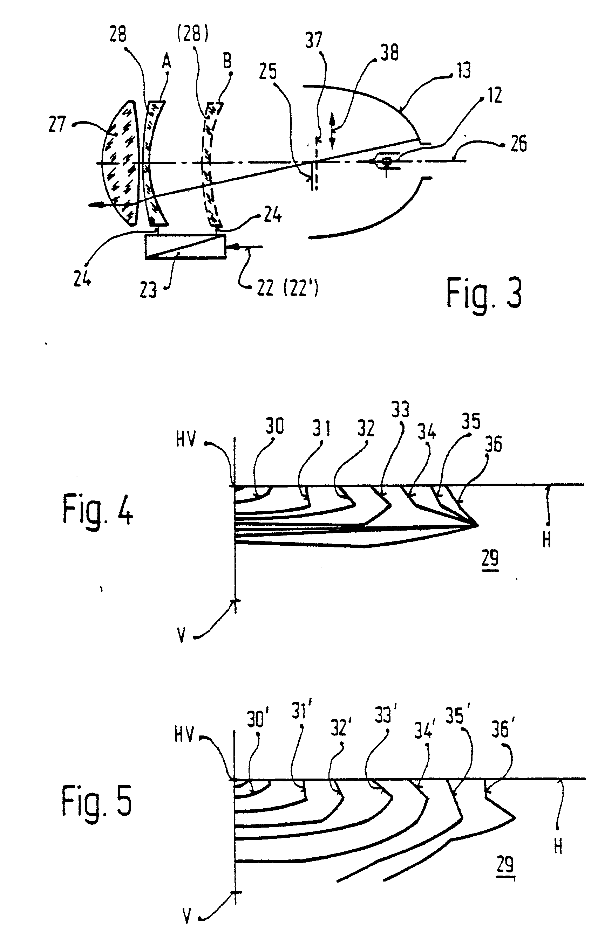

Ein Ausführungsbeispiel der Erfindung ist in der Zeichnung dargestellt und in der Figurenbeschreibung näher erläutert. Es zeigen: Figur 1 abschnittsweise die Frontpartie eines stilisierten Personenkraftfahrzeugs mit dem Blockschaltbild der Scheinwerferlage; Figur 2 den prinzipiellen Aufbau eines Sensors in nicht maßstäblicher Darstellung; Figur 3 einen nach dem Prinzip der Abbildungsoptik wirsenden Abblendlicht-Scheinwerfer in axialer Darstellung mit einem durch Computer gesteuerten Mittel für die axiale Verschiebung eines Objektivteiles und/oder einer querverschiebbaren Zusatzblende; Figur 4 die nur rechte Hälfte der Lichtverteilung gemäß Position A des Objektivteiles in Figur 3; und Figur 5 nur die rechte Hälfte der Lichtverteilung gemäß Position B des Objektivteiles in Figur 3.

Beschreibung des Ausführungsbeispieles

Eine Scheinwerferanlage für einen nur abschnittsweise dargestellten Personenkraftwagen 10 hat zwei Frontscheinwerfer 11 (von denen der zweite hinter dem ersten liegt) mit einer als Glühbirne 12 ausgebildeten Lichtquelle, deren Lichtstrahlen von einem Reflektor 13 reflektiert werden und ein Lichtbündel 14 bilden. Dieses leuchtet die Fahrbahn 15 in einer vorgegebenen Lichtverteilung aus, die der Meßvorschrift der zugehörigen ECE-Regelung entspricht.

Die Scheinwerferanlage hat im Bereich der Frontscheibe einen Sensor 16, der die durch Pfeile 17 dargestellte Verkehrssituation vor dem Fahrzeug 10 registriert und vor allem feststellt, wo im Gesichtsfeld des Kraftfahrzeugführers Änderungen und Einflüsse auftauchen, die u. a. dessen Fahrverhalten beeinflussen könnten. Gemäß Figur 2 hat der Sensor 16 eine Aufnahmeoptik 18, welche die Verkehrssituation 17 (Helligkeit, Farbe udgl.) durch Lichtstrahlen 17′ auf einer Diodenmatrix 19 als Bildpunkte abbildet, die bezüglich ihrer Helligkeit ausgewertet werden. Die Diodenmatrix 19 weist mindestens 144 und höchstens 1296 Dioden (nicht dargestellt) auf, und ihre Breite verhält sich zur Höhe wie 4 : 1.

Wie auch in Figur 1 dargestellt, wird die Verkehrssituation wie Fahrbahnführung, Fahrbahnbeschaffenheit, Verkehrsdichte, Witterung und vor allem augenblickliche Fahrgeschwindigkeit als ein oder mehrere Signale 20 einem als Mikroprozessor ausgebildeten elektrischen Rechner 21 zugeführt, in welchem vorgegebene Parameter der Verkehrssituation u.a. die möglichen Fahrgeschwindigkeiten 9, gespeichert sind. Durch Vergleich dieser Parameter mit dem Signal 20 wird ein Ausgangssignal 22 gebildet.

Die Scheinwerferanlage hat darüber hinaus im Bereich eines jeden Frontscheinwerfers 11 ein als Stellglied 23 ausgebildetes, steuerbares Mittel, das vom Ausgangssignal 22 angesteuert wird und ein in den Frontscheinwerfer 11 ragendes Stößel 24 aufweist. In gleicher Weise wird das Stellglied des zweiten (nicht dargestellt) Frontscheinwerfers durch das Ausgangssignal 22' angesteuert. Der Sensor 16 und der Rechner 21 sowie das Stellglied 23 sind miteinander elektrisch verbunden und bilden eine Vorrichtung.

Ein nach dem Prinzip der Abbildungsoptik wirkender Abblendlicht- Scheinwerfer in Figur 3 hat einen Reflektor 13, dessen Meridianschnitte Kurven höherer Ordnung sind, und eine im Bereich des Reflektor-Brennpunktes angeordnete Glühlampe 12 sowie eine Blende 25, deren optisch wirksame Kante die Helldunkelgrenze des Abblendlicht-Bündels bildet. Der Abblendlichtscheinwerfer hat die Achse 26.

Ein zweiteiliges Objektiv besteht aus einer bikonvexen Linse 27 und aus einer konkav-konvexen Linsen 28, an deren Randbereich der Stößel 24 des Stellgliedes 23 befestigt ist. In der Stellung "A" wird ein Abblendlicht-Bündel erzeugt mit einer Lichteverteilung (nur rechtsseitig dargestellt) gemäß Figur 4. Auf einem Meßschirm 29 schneiden sich die Horizontale H und die Vertikale V im HV-Punkt. Hierin sind die Isoluxlinien 30-36 gleicher Beleuchtungsstärke eingezeichnet.

Steuert der Stößel 24 des Stellglieds 23 die Linse 28 in Richtung der Achse 20 in die Position "B", so wird die Lichtverteilung verändert, und zwar gemäß der in Figur 5 dargestellten Weise; die zugehörigen Isoluxlinien sind 30'-36'. Selbstverständlich gibt es zwischen den beiden Positionen "A" und "B" der Linse 28 stufenlose Zwischenstellungen mit jeweils zugehöriger Zwischen-Lichtverteilung.

Die Scheinwerferanlage, d. h. der Abblendlichtscheinwerfer, hat als weiteres steuerbares Mittel zur Änderung der Lichtverteilung eine Zusatzblende 37, die quer zur optischen Achse 26 gemäß Doppelpfeil 38 verschiebbar ist. In nicht dargestellter Weise erfolgt die Verschiebung ebenfalls durch ein Stellglied, das durch das Ausgangssignal 22 des Rechners 21 steuerbar ist; hierbei sind von Einfluß insbesondere die Parameter: Fahrbahnführung, Fahrbahnbeschaffenheit, Verkehrsdichte und Witterung.

**Patentansprüche**

1. Scheinwerferanlage für Fahrzeuge, insbesondere Kraftfahrzeuge, mit einer Lichtquelle (12) und einem Reflektor (13), die ein Lichtbündel (14) bilden, das die Fahrbahn (15) in einer vorgegebenen Lichtverteilung ausleuchtet, mit einer Vorrichtung (21), die im Fahrzeug angeordnet ist und die eine von mindestens einem Sensor (16) aufgenommene Verkehrssituation (17) vor dem Fahrzeug (10) registriert und durch die abhängig von der Verkehrssituation ein Mittel (23) zur Änderung der Lichtverteilung ansteuerbar ist, dadurch gekennzeichnet, daß die Vorrichtung (21) ein elektronischer Rechner ist, der mit dem Sensor (16) und mit dem Mittel (23) elektrisch verbunden ist und daß der Rechner (21) durch Vergleich der vom Sensor (16) registrierten Verkehrssituation mit im Rechner als Parameter gespeicherten Verkehrssituationen Signale bildet, die das Mittel (23) zur Änderung der Lichtverteilung steuern.

2. Anlage nach Anspruch 1, dadurch gekennzeichnet, daß im Rechner (21) als Parameter die möglichen Geschwindigkeiten des Fahrzeugs gespeichert sind und als Signal (9) die jeweilige Geschwindigkeit des Fahrzeugs dem Rechner (21) zugeleitet werden.

3. Anlage nach Anspruch 1 oder 2, dadurch gekennzeichnet, daß die Parameter u. a. die Fahrbahnführung, Fahrbahnbeschaffenheit, Verkehrsdichte, Witterung sind.

4. Anlage nach einem der vorgenannten Ansprüche, dadurch gekennzeichnet, daß der die Verkehrssituation (17) aufnehmende Sensor (16) aus einer Aufnahmeoptik (18) und einer Diodenmatrix (19) besteht und daß die Aufnahmeoptik (18) die Verkehrssituation (17) auf der Diodenmatrix (19) abbildet.

5. Anlage nach Anspruch 4, dadurch gekennzeichnet, daß die Diodenmatrix (19) mindestens 144 und höchstens 1296 Dioden aufweist.

6. Anlage nach Anspruch 4 oder 5, dadurch gekennzeichnet, daß die Diodenmatrix (19) sich in ihrer Breite zur Höhe verhält wie 4 : 1.

7. Anlage nach einem der vorgenannten Ansprüche, dadurch gekennzeichnet, daß der Scheinwerfer (11) ein aus zwei Linsen (27, 28) bestehendes Objektiv aufweist und daß durch das Mittel (23) zur Änderung der Lichtverteilung mindestens eine der beiden Linsen (27, 28) in Richtung der Achse (26) des Scheinwerfers (11) verstellbar ist.

8. Abblendlicht-Scheinwerfer nach Anspruch 7, dadurch gekennzeichnet, daß er mit einer Blende (25) ausgerüstet ist, deren optisch wirksame Kante die Helldunkelgrenze des Lichtbündels bildet, und daß das Mittel zur Änderung der Lichtverteilung eine quer zur Achse (26) des Scheinwerfers (11) verschiebbare Zusatzblende (37) ist, die von mindestens einem Parameter steuerbar ist.

## Claims

1. Headlamp system for vehicles, particularly motor vehicles, having a light source (12) and a reflector (13), forming a light beam (14) which illuminates the roadway (15) in a prescribed light distribution, having an apparatus (21) which is arranged in the vehicle and which records a traffic situation (17) in front of the vehicle (10), detected by at least one sensor (16), and by which a means (23) for varying the light distribution can be activated as a function of the traffic situation, characterised in that the apparatus (21) is an electronic computer which is electrically connected to the sensor (16) and the means (23), and in that the computer (21) forms signals by comparison of the traffic situation recorded by the sensor (16) with traffic situations stored in the computer as parameters, which signals control the means (23) for varying the light distribution.

2. System according to Claim 1, characterised in that the possible vehicle speeds are stored in the computer (21) as parameters and the present vehicle speed is supplied to the computer (21) as a signal (9).

3. System according to Claim 1 or 2, characterised in that the parameters are, inter alia the roadway layout, roadway condition, traffic density and weather.

4. System according to one of the preceding claims, characterised in that the sensor (16) detecting the traffic situation (17) consists of detection optics (18) and a diode matrix (19), and in that the detection optics (18) form an image of the traffic situation (17) on the diode matrix (19).

5. System according to Claim 4, characterised in that the diode matrix (19) exhibits at least 144 and at most 1,296 diodes.

6. System according to Claim 4 or 5, characterised in that the diode matrix (19) has a width to height ratio of 4 : 1.

7. System according to one of the preceding claims, characterised in that the headlamp (11) exhibits an objective consisting of two lenses (27, 28), and in that at least one of the two lenses (27, 28) is adjustable in the direction of the axis (26) of the headlamp (11) by the means (23) for varying the light distribution.

8. Dipping headlamp according to Claim 7, characterised in that it is fitted with a diaphragm (25) whose optically effective edge forms the light and dark boundary of the light beam, and in that the means for varying the light distribution is an additional diaphragm (37), which is moveable transversely with respect to the axis (26) of the headlamp (11) and is controllable by at least one parameter.

## Revendications

1. Installation pour phares pour véhicules, en particulier véhicules à moteur, avec une source lumineuse (12) et un réflecteur (13) qui forment un faisceau lumineux (14), qui illumine la chaussée (15) selon une répartition lumineuse prédéterminée, avec un dispositif (21), qui est disposé sur le véhicule et qui enregistre une situation de la circulation (17) enregistrée par au moins un capteur (16) en avant du véhicule (10) et qui est commandable par un moyen (23) en fonction de la situation de la circulation de façon à modifier la répartition de la lumière, installation caractérisée en ce que le dispositif (21) est un calculateur électronique, qui est relié au capteur (16) et au moyen (23) et en ce que le calculateur (21) forme des signaux par comparaison de la situation de la circulation enregistrée par le capteur (16) avec les situations de circulation mises en mémoire en tant que paramètres dans le calculateur, signaux qui commandent le moyen (23) servant à modifier la répartition de la lumière.

2. Installation pour phares selon la revendication 1, caractérisée en ce que dans le calculateur (21) sont mis en mémoire comme paramètres, les vitesses possibles du véhicule et est envoyé comme signal (9) au calculateur (21) chacune des vitesses du véhicule.

3. Installation pour phares selon les revendications 1 ou 2, caractérisée en ce que les paramètres sont entre autres, le profil de la chaussée, la qualité de la chaussée, la densité de la circulation, les conditions atmosphériques.

4. Installation pour phares, selon l'une des revendications précédentes, caractérisée en ce que le capteur (16) qui enregistre la situation de la circulation (17) consiste en une optique enregistreuse (18) et une matrice à diodes (19) et en ce que l'optique enregistreuse (18) reproduit la situation de la circulation (17) sur la matrice à diodes (19).

5. Installation pour phares selon la revendication 4, caractérisée en ce que la matrice à diodes (19) présente au moins 144 et au plus 1296 diodes.

6. Installation pour phares, selon les revendications 4 ou 5, caractérisée en ce que la matrice à diodes présente une largeur par rapport à sa hauteur dans le rapport de 4 à 1.

7. Installation pour phares, selon l'une des revendications précédentes, caractérisée en ce que le phare (11) présente un objectif consistant en deux lentilles (27, 28) et en ce que l'une au moins des deux lentilles (27, 28) peut être déplacée dans le sens de l'axe (26) du phare (11) à l'aide du moyen (23) servant à modifier la répartition de la lumière.

8. Phare à feu de croisement, selon la revendication 7, caractérisé en ce qu'il est équipé d'un obturateur (25), dont le bord agissant optiquement forme la limite entre clarté et obscurité de faisceau lumineux et en ce que le moyen servant à modifier la répartition de la lumière est un obturateur additionnel (37) pouvant être déplacé transversalement par rapport à l'axe (26) du phare (11), obturateur qui peut être commandé par au moins un paramètre.

Fig. 1

Fig. 2

28  (28)    37    38      13
27      A    B    25            12
26

24
24
23    22 (22')

Fig. 3

Fig. 4

HV    30  31  32  33  34  35
                          36
H
29
V

Fig. 5

HV    30'  31'  32'  33'  34'  35'  36'
H
29
V